# EUROPÄISCHE PATENTSCHRIFT

(11) **EP 3 138 789 B1**
(45) Veröffentlichungstag und Bekanntmachung des Hinweises auf die Patenterteilung: **18.12.2019**
(21) Anmeldenummer: 16187044.9
(22) Anmeldetag: 02.09.2016
(51) Int. Cl.: B65D 88/54, B65G 53/28, B60P 1/60

(54) **VORRICHTUNG ZUR LAGERUNG VON GRANULAT ODER SCHÜTTGUT**
DEVICE FOR STORING OF GRANULATED MATERIAL OR BULK MATERIAL
DISPOSITIF DE STOCKAGE DE GRANULE OU DE PRODUITS EN VRAC

(30) Priorität: 04.09.2015 DE 102015114815
(43) Veröffentlichungstag der Anmeldung: 08.03.2017
(73) Patentinhaber: Lindner & Fischer Fahrzeugbau GmbH, 89129 Langenau (DE)
(72) Erfinder: Lindner, Alfred, 89335 Ichenhausen (DE); Henßeler, Jörg, 89542 Herbrechtingen (DE)
(74) Vertreter: Hentrich Patentanwälte PartG mbB

(56) Entgegenhaltungen:
- US-A- 2 089 347
- US-A- 3 620 575
- US-A- 4 005 908
- US-A1- 2015 175 365

## Beschreibung

Die Erfindung betrifft eine Vorrichtung zur Lagerung bzw. Zwischenlagerung von Granulat oder Schüttgut wie Holzpellets, Futtermittel oder dergleichen. Sie eignet sich also generell für alle rieselfähigen Medien.

Die Anzahl an mit nachwachsenden Rohstoffen betriebenen Heizungseinrichtungen steigt aufgrund des in der Bevölkerung gewachsenen Umweltbewusstseins. Viele Haushalte haben daher ihre Heizungseinrichtung inzwischen auf eine Holzpelletheizung umgestellt, bei der meist über eine Förderschnecke Holzpellets aus einem Bunker gefördert und der Brennereinheit zugeführt werden. Wenn jedoch die Beförderungseinrichtung (zumeist in Form einer Förderschnecke) oder ihre Antriebseinrichtungen gewartet, repariert oder getauscht werden müssen, so ist es meist bzw. fast immer erforderlich, den Pelletbunker vollständig zu leeren. Dabei wurde in manchen Fällen der Pelletbunker sogar von Hand mit einer Schaufel geleert.

Außerdem ist es erforderlich, in regelmäßigen Abständen Restmengen mit einem hohen Staubanteil aus dem Vorratsraum /-behälter zu entfernen, um die Abgaswerte bei der Verbrennung einzuhalten und Schäden am Heizsystem zu vermeiden.

Die US 4,005,908 zeigt eine Vorrichtung, mit der Feststoffe von einem ersten Behälter zu einem weiter entfernten Ort transportiert werden können. Die Vorrichtung ist dabei stationär ausgebildet.

Aus der US 3,620,575 ist eine Vorrichtung bekannt, die einen auf einem Anhängerfahrgestell angeordneter Tank umfasst. Durch einen Motor ist es bei der D2 möglich, den Tank mit Feststoffen zu befüllen und diesen auch wieder zu entleeren, indem die Laufrichtung des Motors umgedreht wird. Die US 2,089,347 zeigt dabei eine Vorrichtung, mit der pulverisierte Kohle aus einem Behältnis be- und entladen werden kann. Zur Verstellung zwischen der Entleer- und der Befüllkonfiguration ist es dabei vorgesehen, die Laufrichtung des Gebläses umzukehren.

Die US 2015/0175365 A1 zeigt eine Vorrichtung zum Anliefern von Salz, die einen Tank umfasst, der durch eine Luftpumpe entleert wird, um das in dem Tank befindliche Salz an den Endabnehmer zu liefern.

Der vorliegenden Erfindung liegt daher die Aufgabe zugrunde, eine alternative Vorrichtung zur Lagerung bzw. Zwischenlagerung von Granulat oder Schüttgut wie Holzpellets, Futtermittel oder dergleichen bereitzustellen, die dem Kompressor einen verbesserten Schutz vor Staub bietet.

Diese Aufgabe wird durch eine Vorrichtung mit dem Merkmalsbestand gemäß Patentanspruch 1 gelöst. Bevorzugte Ausführungsformen sind in den abhängigen Ansprüchen angegeben. Die erfindungsgemäße Vorrichtung umfasst dabei einen Tank, der eine Befüllöffnung und eine Entleeröffnung aufweist, welche zwischen einer Offenstellung und einer Schließstellung verstellbar ist. Ferner ist eine Einheit zur Erzeugung eines Unterdrucks und eines Überdrucks innerhalb des Tanks vorgesehen. An die Befüllöffnung und an die Entleeröffnung ist ein Leitungssystem zur Förderung des Granulats oder des Schüttguts in dem Tank oder aus dem Tank angeschlossen.

Damit ist der Vorteil verbunden, dass beispielsweise ein Pelletbunker durch das im Tank vorliegende bzw. erzeugte Vakuum über das Leitungssystem leergesaugt werden kann. Sobald der Pelletbunker leer gesaugt ist, kann dann die Wartung an der Heizungseinrichtung bzw. der Förderschnecke oder deren Antriebseinrichtung vorgenommen werden. Die Einheit zur Erzeugung eines Unterdrucks innerhalb des Tanks ist dabei derart ausgestaltet, dass durch diese nicht nur Holzpellets, sondern jedes beliebige rieselfähige Medium gefördert werden kann. Die vorliegende Erfindung ist also nicht auf die Lagerung bzw. Zwischenlagerung oder auf die Förderung von Holzpellets beschränkt. Ein weiterer Vorteil der Erfindung liegt darin, dass diese sehr kompakt gebildet werden kann, wodurch sie auf Anhängern oder Kleintransportern mitführbar ist. Die Zugfahrzeuge der Anhänger oder auch die Kleintransporter besitzen einen sehr viel geringeren Kraftstoffverbrauch als Großtransporter bzw. Lastkraftwägen, so dass durch den Einsatz der vorliegenden Erfindung die Umwelt geschont wird. Die vorliegende Erfindung ermöglicht es zusätzlich Klein- und/oder Kleinstmengen zu liefern. Auch dies ist mit großen Transportern nur bedingt möglich, da diese in Falle einer Kleinmengenlieferung zumeist nahezu "leer" fahren. Die vorliegende Erfindung zeichnet sich deshalb auch in wirtschaftlicher Hinsicht und hinsichtlich Effizienz aus.

Um die Einheit zur Erzeugung eines Unterdrucks und eines Überdrucks innerhalb des Tanks räumlich vom Tank absetzen zu können, hat es sich als sinnvoll erwiesen, wenn der Tank einen Druckanschluss aufweist, der mit der Einheit zur Erzeugung eines Unterdrucks und eines Überdrucks strömungsverbunden ist.

Die Einheit zur Erzeugung des Unterdrucks und des Überdrucks ist schaltbar zwischen einer Befüllkonfiguration, in welcher in dem Tank ein Unterdruck erzeugt wird oder vorliegt zur Befüllung des Tanks, und einer Entleerkonfiguration, in welcher in dem Tank ein Überdruck erzeugt wird oder vorliegt zur Entleerung des Tanks. Somit ist also die Einheit zur Erzeugung eines Unterdrucks und eines Überdrucks in zwei Betriebsmodi betreibbar. Die Einheit ist damit sowohl zur Entleerung des Tanks, als auch zur Befüllung des Tanks mit einem Granulat oder einem Schüttgut geeignet.

Um auch entlegenere Pelletbunker, Gruben oder sonstige Behälter entleeren oder befüllen zu können, hat es sich als sinnvoll erwiesen, wenn das Leitungssystem ein Zufuhrleitungssystem für die Förderung des Granulats oder des Schüttguts in den Tank und ein Entleerleitungssystem zur Förderung des Granulats oder des Schüttguts aus dem Tank umfasst.

Weiterhin hat es sich als bevorzugt gezeigt, wenn die Einheit zur Erzeugung des Überdrucks in der Offenstellung der Entleeröffnung mit dem Entleerleitungssystem derart strömungsverbunden ist, dass das Entleerleitungssystem fluiddurchströmt ist zur Mitnahme oder zur Abfuhr des Granulats oder des Schüttguts. Damit liegt beispielsweise beim Entleeren des Tanks, bzw. beim Befüllen oder Wiederbefüllen eines Pelletbunkers, ein Luftstrom an der Entleeröffnung an, durch den das im Tank befindliche Medium mitgenommen wird.

Um den Fluidstrom oder einen Luftstrom hinsichtlich seiner Stärke variieren oder steuern zu können, ist es vorgesehen, dass dem Leitungssystem und einem mit dem Druckanschluss verbundenen Druckleistungssystem mindestens ein Ventil zugeordnet ist.

Da viele gelagerte und zwischengelagerte rieselfähige Schüttgüter zusätzliche Staubpartikel aufweisen oder einer gewissen Staubentwicklung unterliegen, ist dem Druckleitungssystem (Überdruck- und Unterdruckleitungssystem) mindestens ein Filter zugeordnet und gegebenenfalls mindestens eine Rückhaltevorrichtung zum Zurückhalten des Granulats oder des Schüttguts.

Ein Verfahren zum Befüllen eines Tanks umfasst die Schritte:
1. ggfs. Überführen einer Befüllöffnung eines Tanks zur Zwischenlagerung von Granulat oder von Schüttgut aus einer Offenstellung in eine Schließstellung, sofern nicht bereits erfolgt,
2. ggfs. Überführen einer Entleeröffnung des Tanks aus einer Offenstellung in eine Schließstellung, sofern nicht bereits erfolgt,
3. Erzeugen eines Unterdrucks in dem Tank durch die Einheit zur Erzeugung von einem Unterdruck innerhalb des Tanks,
4. Überführen der Befüllöffnung aus einer Schließstellung in die Offenstellung und Förderung des Granulats oder des Schüttguts in den Tank.

Mit diesem Vefahren ist der Vorteil verbunden, dass der Pelletbunker oder das Behältnis, in dem sich das Granulat oder das Schüttgut befindet durch den im Tank befindlichen Unterdruck leergesaugt werden kann und das abgesaugte rieselfähige Medium sicher im Tank gelagert bzw. zwischengelagert ist. Ein Verfahren zum Entleeren des Tanks umfasst die Schritte:
5. Ggfs. Überführen einer Befüllöffnung eines Tanks zur Zwischenlagerung von Granulat oder von Schüttgut aus einer Offenstellung in eine Schließstellung, sofern nicht bereits erfolgt,
6. Ggfs. Überführen einer Entleeröffnung des Tanks aus einer Schließstellung in eine Offenstellung, sofern nicht bereits erfolgt,
7. Erzeugen eines Überdrucks in dem Tank durch die Einheit zur Erzeugung eines Überdrucks innerhalb des Tanks,
8. Erzeugen einer an der Entleeröffnung verbeiströmenden Mitnahmeströmung durch die Einheit zur Erzeugung eines Überdrucks, und
9. dadurch Mitnahme des Granulats oder des Schüttguts.

Im Folgenden wird die Erfindung an einem in der Zeichnung dargestellten Ausführungsbeispiel näher erläutert; es zeigen:
- Fig. 1: eine schematische Darstellung der erfindungsgemäßen Vorrichtung auf einem Anhänger,
- Fig. 2: ein Fließschema der erfindungsgemäßen Vorrichtung in der Befüllkonfiguration, und
- Fig. 3: ein Fließschema der erfindungsgemäßen Vorrichtung in der Entleerkonfiguration.

In den Figuren ist eine Vorrichtung zur Lagerung bzw. Zwischenlagerung von Granulat oder Schüttgut wie Holzpellets, Futtermittel oder dergl. gezeigt. Diese Vorrichtung weist einen Tank 1 auf, in dem das Granulat oder das Schüttgut aufgenommen werden kann. Dieses kann durch eine Befüllöffnung 2 in den Tank 1 gelangen. In der gezeigten Ausführungsform ist eine von der Befüllöffnung 2 gesonderte, bzw. räumlich getrennte Entleeröffnung 3 an dem Tank 1 ausgebildet. Die Vorrichtung umfasst weiterhin ein Leitungssystem 5, das sich an die Befüllöffnung und an die Entleeröffnung 3 angeschlossen ist. Vorliegend ist das Leitungssystem 5 gebildet aus einem an die Befüllöffnung angeschlossenes Zufuhrleitungssystem 7 und einem an die Entleeröffnung 3 angeschlossenes Entleerleitungssystem 8.

Sowohl die Befüllöffnung 2 als auch die Entleeröffnung 3 sind vorliegend zwischen einer Offenstellung und einer Schließstellung verstellbar, wobei die Verstellung entweder manuell oder automatisiert erfolgt. Aus den Figuren geht hervor, dass die Befüllöffnung 2 im Wesentlichen gegenüberliegend zu der Entleeröffnung 3 am Tank 1 angeordnet ist, wobei sich ferner die Entleeröffnung 3 bodenseitig am Tank 1 befindet. Der Tank 1 selbst ist bezüglich der Vertikalen im Wesentlichen zylindrisch gebildet, wodurch ein Luftstrom diesen einfach umfließen kann. Er eignet sich daher zum Einsatz auf oder an einem Fahrzeug. Er kann jedoch auch andere Formen bereits bekannter fahrender Silos besitzen. Im gezeigten Ausführungsbeispiel verläuft der Tank 1 kegelförmig auf die Entleeröffnung 3 zu. Die Entleeröffnung 3 ist vorliegend mit einer Bodenklappe gebildet, die beim Befüllen des Tanks 1 geschlossen, zum Entleeren des Tanks 1 jedoch geöffnet ist.

Um das Granulat oder das Schüttgut in den Tank 1 zu fördern, ist eine Einheit 4 zur Erzeugung eines Unterdrucks innerhalb des Tanks 1 vorgesehen. Im gezeigten Ausführungsbeispiel ist die Einheit 4 zur Erzeugung eines Unterdrucks zugleich eine Einheit 4 zur Erzeugung eines Überdrucks innerhalb des Tanks 1. Sie kann daher in zwei verschiedenen Betriebsmodi, nämlich in einer Entleerkonfiguration und in einer Befüllkonfiguration, betrieben werden. Mit anderen Worten ist die Einheit 4 zur Erzeugung des Unterdrucks und des Überdrucks innerhalb des Tanks 1 also umschaltbar zwischen einer Befüllkonfiguration, in welcher in dem Tank 1 ein Unterdruck erzeugt wird oder vorliegt zur Befüllung des Tanks 1 und einer Entleerkonfiguration, in welches in dem Tank 1 ein Überdruck erzeugt wird oder vorliegt zur Entleerung des Tanks 1.

Im gezeigten Ausführungsbeispiel ist die Einheit 4 zur Erzeugung eines Unterdrucks und eines Überdrucks innerhalb des Tanks 1 als ein Kompressor 41 gebildet. Diese kann elektromotorisch betrieben werden, z.B. mit einem von einem Akkumulator gespeisten Elektromotor. Eine andere Ausführungsform der Einheit 4 zur Erzeugung des Unterdrucks und des Überdrucks verwendet einen kraftstoffgespeisten Verbrennungsmotor. Es ist in einer weiteren Ausführungsform auch möglich, die Einheit 4 zur Erzeugung des Unterdrucks und des Überdrucks mit Hilfe der Zapfwelle eines Traktors zu betreiben.

Um einen Unterdruck oder einen Überdruck im Tank erzeugen zu können, ist an dem Tank 1 ein Druckanschluss 6 vorgesehen, der mit dem Kompressor 41 strömungsverbunden ist. Zusätzlich ist der Kompressor 41 auch strömungsverbunden mit dem Entleerleitungssystem 8, derart, dass in der Entleerkonfiguration das Entleerleitungssystem 8 fluiddurchströmt ist zur Mitnahme oder zur Abfuhr des Granulats oder des Schüttguts.

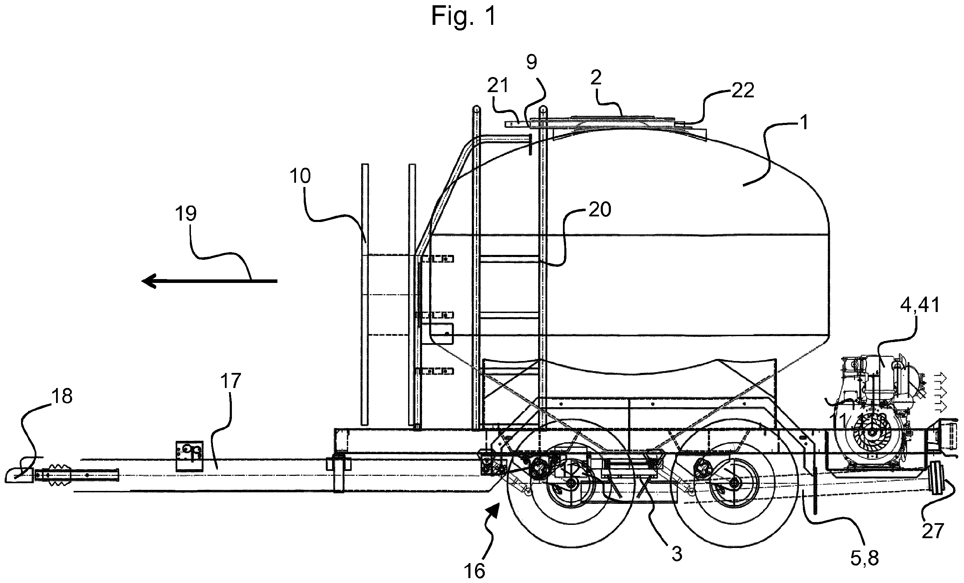

In Figur 1 ist die erfindungsgemäße Vorrichtung auf einem Anhängerfahrgestell 16 angeordnet. Eine alternative Ausführungsform sieht vor, die Vorrichtung zur Lagerung bzw. Zwischenlagerung von Granulat oder Schüttgut auf einem Wechselrahmen für Lastkraftwagen anzuordnen. Darüber hinaus kann die erfindungsgemäße Vorrichtung auch auf einem Grundrahmen für eine Pritschenverladung angeordnet sein. Die vorliegende Erfindung kann auch in einem geschlossenen Kastenwagen (z.B. Transporter, Van, etc.) oder auf einem Palettensystem zum Transport mittels eines Gabelstaplers, Frontladers, bzw. mittels einer Transportgabel an einem Traktor (z.B. an dessen Front- oder Heckaufnahmesystem) angeordnet sein. Weiterhin kann sie auch auf abrollbaren oder absetzbaren Container bzw. auf einem wechselbaren Geräteträger eines Lastkraftwagens positioniert sein.

In Figur 1 ist zu erkennen, dass das Anhängerfahrgestell 16 eine Deichsel 17 mit einer Kugelkopfkupplung umfasst. Es ist jedoch auch möglich andere Arten von Kupplungen 18 einzusetzen, wie z.B. eine Maulkupplung, eine Bolzenkupplung, eine Sattelkupplung usw. Der gezeigte Anhänger ist mit einer Doppel- oder einer Tandemachse ausgeführt. Der Anhänger verfügt zusätzlich über eine Auflaufbremsvorrichtung. Diese Ausführungsform eignet sich insbesondere zur Nischenlieferung von Granulaten oder von Schüttgütern. So können beispielsweise mit der vorliegenden Erfindung auch "Kleinlieferungen" in entlegene Bergregionen bzw. Bergdörfer erfolgen, zu denen ein großes Silofahrzeug nicht oder nur schwer hingelangt. Weiterhin kann die erfindungsgemäße Vorrichtung Einsatz finden an schwer zugänglichen Stellen innerhalb von Städten (z.B. aufgrund der Bausituation oder der Verkehrsinfrastruktur). Solche sind beispielsweise schwer erreichbare Hinterhöfe von Häusern oder enge Straßen, die ein großer Lastkraftwagen nicht befahren darf oder kann.

Vorliegend ist am Tank 1 zusätzlich eine Aufrolleinrichtung, beim vorliegenden Ausführungsbeispiel eine Lagereinrichtung 10 für das Leitungssystem 5 bzw. für Teile davon vorgesehen. Auch anderes Zubehör kann darin gelagert sein. Diese Lagereinrichtung 10 ist auf der in Fahrtrichtung 19 angeordneten Seite des Tanks 1 vorgesehen. Der Lagereinrichtung 10 gegenüberliegend, das heißt entgegen der Fahrrichtung 19, ist der Kompressor 41 angeordnet. Durch die entsprechende Anordnung der Aufrollvorrichtung und/oder der Lagervorrichtung 10 einerseits und der Anordnung des Kompressors 41 andererseits können die Kippmomente auf das Fahrgestell des Anhängers ausgeglichen werden. Die einzelnen Komponenten können jedoch in Abhängigkeit der Aufbau- / Ausführungsvariante auch an einer anderen Position angeordnet sein, um beispielsweise den Schwerpunkt des Gesamtsystems zu verlagern oder um den vorhandenen Bauraum optimal auszunutzen.

An dem Tank 1 kann zusätzlich eine Trittleiter 20 angeordnet sein, damit ein Benutzer ans obere Ende, das heißt an das dem Fahrwerk abgewandten Ende des Tanks 1 gelangen kann. Dort ist in der gezeigten Ausführungsform ein manuell betätigbarer Deckel 9 angeordnet. Der Deckel kann in einer anderen Ausführungsform auch automatisch, beispielsweise mit Hilfe eines Pneumatikantriebes, mit Hilfe eines Hydrauliksystems, mit Hilfe eines Elektromotors etc. betätigt werden. Dieser Deckel 9 kann vom Benutzer geöffnet und geschlossen werden, um beispielsweise eine Sichtprüfung des Tanks 1 oder des Füllstandes innerhalb des Tanks 1 vorzunehmen. Zur Betätigung des Deckels 9 kann dieser über einen Griffabschnitt 21 verfügen. Der Deckel 9 ist dabei mehrseitig, insbesondere zweiseitig in Schienen 22 geführt und weist eine Dichtung auf. Anstelle eine Schiebedeckels kommt auch ein Klappdeckel oder eine andere Form einer Verschlusseinrichtung infrage. Dieser Deckel 9 bzw. seine Dichtung ist derart ausgestaltet, dass innerhalb des Tanks 1 ein Vakuum oder auch ein Überdruck durch den Kompressor 41 erzeugbar ist. Entsprechend abgedichtet sind auch die Entleeröffnung 3 und die Befüllöffnung 2 in der Schließstellung.

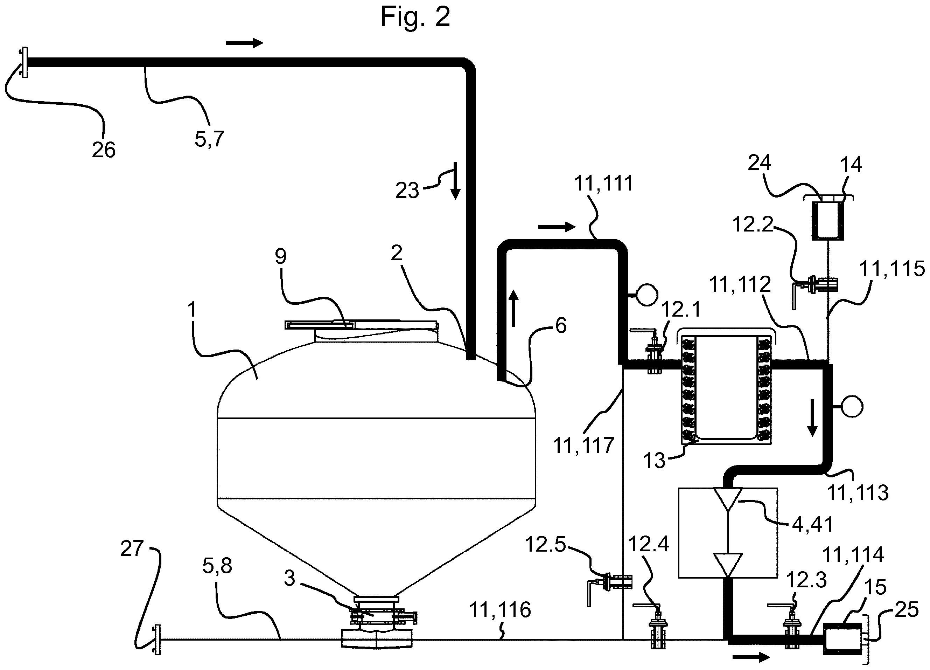

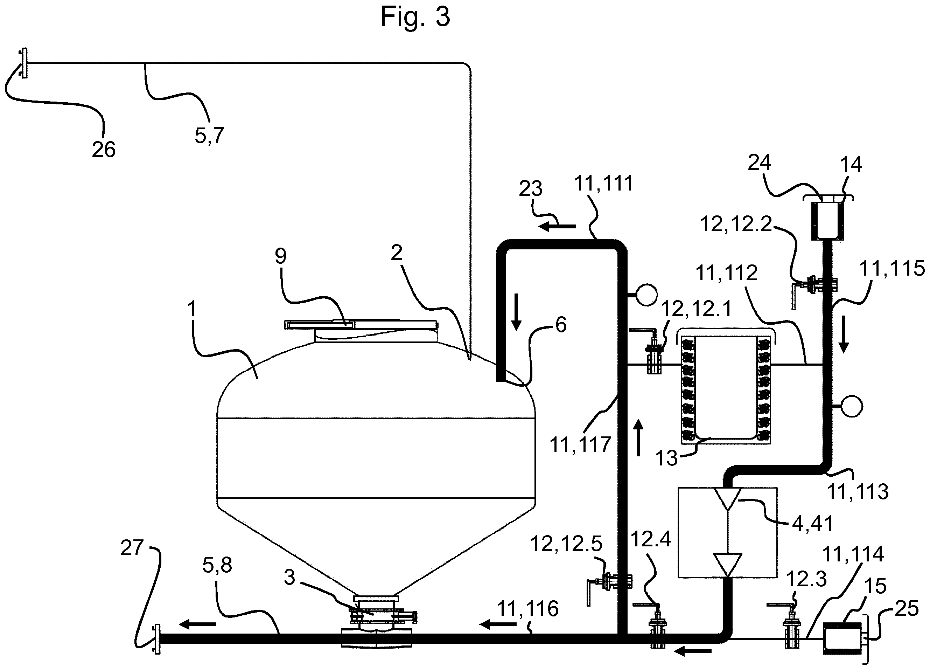

Nachstehend soll die Funktionsweise der vorliegenden Erfindung anhand der Schemata aus Figuren 2 und 3 näher erläutert werden. Fett dargestellte Linien betreffen hierbei Leitungen, die mit dem Granulat oder Schüttgut bzw. mit einem (Transport-)Fluid durchströmt sind. Die mit dünnen Linien gezeichneten Leitungen sind nicht durchströmt. Die Pfeile 23 zeigen die Strömungsrichtung innerhalb der betreffenden Leitung an.

In Figur 2 ist die erfindungsgemäße Vorrichtung zur Lagerung bzw. Zwischenlagerung von Granulat oder Schüttgut in einer Befüllkonfiguration gezeigt, wobei der Kompressor 41 ebenfalls in die Befüllkonfiguration gestellt ist.

Der Kompressor 41 ist über ein Druckleitungssystem 11 an den Druckanschluss 6 angeschlossen und damit mit diesem strömungsverbunden. An dem Druckanschluss 6 ist dazu eine Druckleitung 111 des Druckleitungssystems 11 angeschlossen durch die das im Tank 1 befindliche Fluid bzw. das Gas abgesaugt wird. Der Gasstrom wird durch einen Filter 13 gefiltert, der in einer Filterleitung 112 des Druckleitungssystems 11 angeordnet ist. Von der Filterleitung 112 gelangt der abgesaugte Gasstrom dann zur Kompressorleitung 113 des Druckleitungssystems 11, in der der Kompressor 41 angeordnet ist. Der Kompressor 41 entlüftet den abgesaugten Gasstrom über die Abgasleitung 114 des Druckleitungsystems 11, bzw. gibt ihn vorzugsweise über einen Abgasfilter 15 an einem Auslass 25 ab.

Das Druckleitungssystem 11 umfasst vorliegend mehrere Ventile 12, die manuell, bzw. automatisiert geöffnet und/oder teilgeöffnet und/oder geschlossen werden können. Der vorstehend beschriebene Fluss des Gasstromes ausgehend von dem Tank 1 hin zum Auslass 25 wird durch die Stellung von Ventilen 12 beeinflusst. In der Befüllkonfiguration sind die Ventile 12.1 (=Druck-Vakuum-Ventil) und 12.3 (=Abgasventil) geöffnet, wohingegen die Ventile 12.2. (=Ansaugventil), 12.4 (=Entleerleitungssystemventil) und 12.5 (=Steuerventil) geschlossen sind.

In der Befüllkonfiguration befindet sich weiterhin die Entleeröffnung 3 in der Schließstellung, so dass durch den Betrieb des Kompressors 41 in der Befüllkonfiguration ein Unterdruck im Tank 1 erzeugbar ist bzw. erzeugt wird. Wird nun die Befüllöffnung 2 geöffnet, so wird am Ansaugende 26 über das Zufuhrleitungssystem 7 des Leitungssystems 5 ein Granulat oder ein Schüttgut, z.B. Holzpellets, in den Tank 1 gesaugt.

Damit Bestandteile des Schüttgutes und Stäube nicht in den Kompressor 41 gelangen ist zusätzlich der Filter 13 vorgesehen, wobei auch am Druckanschluss 6 eine Rückhaltevorrichtung eingesetzt werden kann, um das bereits in den Tank 1 beförderte Schüttgut oder Granulat in diesem zurückzuhalten.

Ist der Tank 1 gefüllt bzw. ist der leerzusaugende Behälter oder Bunker (z.B. Pelletbunker) vollständig entleert, so kann der Kompressor 41 abgeschaltet werden. Die Vorrichtung bzw. der Tank 1 der Vorrichtung dient dann als Lager bzw. als Puffer- oder Zwischenlager für das sich im Tank 1 befindliche Medium.

Soll dieses Medium nun wieder aus dem Tank 1 herausbefördert werden, so ist die Entleeröffnung 3 in die Offenstellung zu verstellen. Dadurch kann das im Tank 1 befindliche rieselfähige Medium aufgrund seiner eigenen Gewichtkraft, bzw. aufgrund der auf ihm lastenden Gewichtskraft des darüber liegenden Granulats oder Schüttguts aus dem Tank 1 herausrieseln, wodurch der Tank 1 entleert wird.

Die in der Figur 3 gezeigte Ausführungsform der vorliegenden Erfindung befördert das Medium aktiv aus dem Tank 1. In Figur 3 ist die erfindungsgemäße Vorrichtung zur Lagerung bzw. Zwischenlagerung von Granulat oder Schüttgut in der Entleerkonfiguration gezeigt.

In der Entleerkonfiguration sind nun die Ventile 12.1 und 12.3 geschlossen, wohingegen die Ventile 12.2 und 12.4 geöffnet sind. Dies führt dazu, dass der Kompressor 41 an einer Ansaugleitung 115 des Druckleitungssystems 11, vorzugsweise am Einlass 24 über einen Ansaugfilter 14, ein Fluid, insbesondere Luft ansaugt. Die angesaugte Luft wird mittels des Kompressors 41 durch die Kompressorleitung 113 zu einer Strömungsleitung 116 des Druckleitungssystems 11 gefördert. Die Strömungsleitung 116 geht in das Entleerleitungssystem 8 über, was dazu führt, dass der angesaugte Luftstrom an der Entleeröffnung 3 des Tanks 1 vorbeiströmt.

Wird oder ist nun die Entleeröffnung 3 geöffnet, so rieselt das sich im Tank 1 befindliche Medium heraus und wird durch den angesaugten Fluidstrom mitgenommen bzw. abtransportiert und am Abgabeende 27 abgegeben.

Wie sich aus Figur 3 zusätzlich ergibt, ist das Ventil 12.5 geöffnet oder teilgeöffnet, wodurch der Kompressor 41 über eine Steuerleitung 117 des Druckleitungssystems 11 zusätzlich einen Überdruck innerhalb des Tanks 1 erzeugt. Dadurch kann sich das Granulat oder das Schüttgut noch einfacher aus dem Tank 1 herausbewegen, da es durch den Überdruck zusätzlich zur Entleeröffnung 3 herausgedrückt wird. Um zu gewährleisten, dass kein Granulat oder Schüttgut über das Zufuhrleitungssystem 7 entweicht, kann die Befüllöffnung 2 in die Schließstellung verstellt werden, wodurch das Granulat ausschließlich über die Entleeröffnung 3 aus dem Tank gelangen kann.

Alle gezeigten Leitungssysteme können einerseits aus Rohrleitungen, andererseits aber auch aus Schlauchleitungen gebildet sein. Eine andere Ausführungsform sieht eine Mischung aus Rohrleitungen und Schlauchleitungen vor, die sich an den jeweiligen Bedarf und Einsatzzweck anpassen lässt.

### Bezugszeichenliste

- 1: Tank
- 2: Befüllöffnung (zur Selbstbefüllung)
- 3: Entleeröffnung
- 4: Einheit zur Erzeugung eines Unterdrucks und/oder eines Überrucks innerhalb des Tanks
- 5: Leitungssystem
- 6: Druckanschluss
- 7: Zufuhrleitungssystem
- 8: Entleerleitungssystem
- 9: Deckel (kann auch eine Öffnung für die Fremdbefüllung sein)
- 10: Lagereinrichtung bzw. Aufrolleinrichtung
- 11: Druckleitungssystem
- 12: Ventil
- 12.1: Druck-Vakuum-Ventil
- 12.2: Ansaugventil
- 12.3: Abgasventil
- 12.4: Entleerleitungssystemventil
- 12.5: Steuerventil
- 13: Filter
- 14: Ansaugfilter
- 15: Abgasfilter
- 16: Anhängerfahrgestell
- 17: Deichsel
- 18: Kupplung
- 19: Fahrrichtung
- 20: Trittleiter
- 21: Griffabschnitt
- 22: Schienen
- 23: Pfeile (Strömungsrichtung)
- 24: Einlass
- 25: Auslass
- 26: Ansaugende
- 27: Abgabeende
- 41: Kompressor
- 111: Druckleitung
- 112: Filterleitung
- 113: Kompressorleitung
- 114: Abgasleitung
- 115: Ansaugleitung
- 116: Strömungsleitung
- 117: Steuerleitung

## Patentansprüche

1. Vorrichtung zur Lagerung bzw. Zwischenlagerung von Granulat oder Schüttgut wie Holzpellets, Futtermittel oder dergleichen,
mit einem Tank (1),
der eine Befüllöffnung (2) und eine räumlich von dieser getrennte sowie der Befüllöffnung (2) gegenüberliegend, bodenseitig angeordnete Entleeröffnung (3) aufweist, wobei die Befüllöffnung (2) und die Entleeröffnung (3) zwischen einer Offenstellung und einer Schließstellung verstellbar sind,
mit einem an die Befüllöffnung (2) angeschlossenen Zufuhrleitungssystem (7) eines Leitungssystems (5) zur Förderung des Granulats oder des Schüttguts in den Tank (1),
mit einem an die Entleeröffnung (3) angeschlossenen Entleerleitungssystem (8) des Leitungssystems (5) zur Förderung des Granulats oder des Schüttguts aus dem Tank (1),
sowie mit einem Druckleitungssystem (11), das mit einem Druckanschluss (6) des Tanks (1) verbunden ist umfassend:
- eine an dem Druckanschluss (6) angeschlossene Druckleitung (111);
- eine an der Druckleitung (111) angeschlossene Filterleitung (112), in welcher ein Filter (13) und ein Druck-Vakuum-Ventil (12.1) angeordnet sind;
- eine an der Filterleitung (112) angeschlossene Kompressorleitung (113), in welcher ein Kompressor (41) in Form einer Einheit (4) zur Erzeugung eines Unterdrucks innerhalb des Tanks (1) in einer Befüllkonfiguration und in Form einer Einheit (4) zur Erzeugung eines Überdrucks innerhalb des Tanks (1) in einer Entleerkonfiguration angeordnet ist;
- eine mit der Kompressorleitung (113) stromauf des Kompressors (41) verbundene Ansaugleitung (115), in welcher ein Ansaugventil (12.2) angeordnet ist;
- eine mit der Kompressorleitung (113) stromab des Kompressors (41) verbundene Abgasleitung (114), in welcher ein Abgasfilter (15) und ein Abgasventil (12.3) angeordnet sind;
- eine an der Kompressorleitung (113) angeschlossene Strömungsleitung (116), in welcher ein Entleerleitungssystemventil (12.4) angeordnet ist, wobei die Strömungsleitung (116) außerdem mit dem Entleerleitungssystem (8) verbunden ist; und
- eine mit der Strömungsleitung (116) verbundene Steuerleitung (117), in welcher ein Steuerventil (12.5) angeordnet ist, wobei die Steuerleitung (117) außerdem mit der Druckleitung (111) verbunden ist.

2. Vorrichtung nach Anspruch 1, **dadurch gekennzeichnet, dass** der Kompressor (41) in der Entleerkonfiguration mit der Entleeröffnung (3) in der Offenstellung mit dem Entleerleitungssystem (8) derart strömungsverbunden ist, dass das Entleerleitungssystem (8) fluiddurchströmt ist zur Mitnahme oder zur Abfuhr des Granulats oder des Schüttguts.

3. Vorrichtung nach Anspruch 1 oder 2, **dadurch gekennzeichnet, dass** die Befüllöffnung (2) in einem den Tank (1) bedeckenden, vorzugsweise manuell betätigbaren Deckel (9) angeordnet ist.

4. Vorrichtung nach einem der Ansprüche 1 bis 3, **dadurch gekennzeichnet, dass** eine Aufrolleinrichtung und/oder eine Lagereinrichtung (10) vorgesehen ist, zum Aufrollen und/oder Lagern des Leitungssystems (5) bzw. Teilen davon.

## Claims

1. A device for the storage or intermediate storage of granulate or bulk material such as wood pellets, animal feed or the like,
with a tank (1),
which has a filling opening (2) and an emptying opening (3) which is spatially separated from the filling opening (2) and which is arranged opposite to the filling opening (2) on the bottom side, the filling opening (2) and the emptying opening (3) being adjustable between an open position and a closed position,
with a supply line system (7) of a line system (5) connected to the filling opening (2), for conveying the granulate or the bulk material into the tank (1),
with an emptying line system (8) of the line system (5) connected to the emptying opening (3) for conveying the granulate or the bulk material out of the tank (1),
and with a pressure line system (11) connected to a pressure port (6) of the tank (1), comprising:
- a pressure line (111) connected to the pressure port (6);
- a filter line (112), in which a filter (13) and a pressure-vacuum valve (12.1) are arranged, being connected to the pressure line (111);
- a compressor line (113), in which a compressor (41) in the form of a unit (4) for generating a negative pressure inside the tank (1) in a filling configuration and in the form of a unit (4) for generating a positive pressure inside the tank (1) in an emptying configuration is arranged, being connected to the filter line (112);
- a suction line (115), in which a suction valve (12.2) is arranged, being connected to the compressor line (113) upstream of the compressor (41);
- an exhaust line (114), in which an exhaust filter (15) and an exhaust valve (12.3) are arranged, being connected to the compressor line (113) downstream of the compressor (41);
- a flow line (116), in which a drain line system valve (12.4) is disposed, the flow line (116) being connected to said compressor line (113) and further being connected to the emptying line system (8); and
- a control line (117), in which a control valve (12.5) is arranged, the control line (117) being connected to the flow line (116) and further being connected to the pressure line (111).

2. The device according to claim 1, **characterized in that** in the emptying configuration the compressor (41) is flow-connected with the emptying line system (8), while the emptying opening (3) is in the open position, such that fluid flows through the emptying line system (8) for entrainment or removal of the granulate or bulk material.

3. The device according to claim 1 or 2, **characterized in that** the filling opening (2) is arranged within a cover (9) covering the tank (1), preferably being manually operable.

4. The device according to any of claims 1 to 3, **characterized in that** a rolling device and/or a bearing device (10) is provided for rolling up and/or bearing the pipe system (5) or parts thereof.

## Revendications

1. Dispositif de stockage ou de stockage intermédiaire de granulés ou de produits en vrac, tels que des granulés de bois, des aliments pour animaux ou des produits analogues,
comprenant un réservoir (1) qui présente une ouverture de remplissage (2) et une ouverture de vidange (3) qui est séparée dans l'espace de l'ouverture de remplissage (2) et est située en vis-à-vis de celle-ci, côté fond, l'ouverture de remplissage (2) et l'ouverture de vidange (3) pouvant être modifiées entre une position d'ouverture et une position de fermeture, comprenant un système de conduite d'amenée (7) d'un système de conduites (5), qui est raccordé à l'ouverture de remplissage (2) et destiné à transporter les granulés ou les produits en vrac dans le réservoir,
comprenant un système de conduite de vidange (8) du système de conduites (5), qui est raccordé à l'ouverture de vidange (3) et destiné à transporter les granulés ou les produits en vrac hors du réservoir,
et comprenant un système de conduites sous pression (11) qui est relié à un raccord de pression (6) du réservoir (1) et comporte :
- une conduite sous pression (111) reliée au raccord de pression (6) ;
- une conduite de filtration (112) qui est reliée à la conduite sous pression (111) et dans laquelle sont disposés un filtre (13) et une vanne de pression-vide (12.1) ;
- une conduite de compresseur (113) qui est reliée à la conduite de filtration (112) et dans laquelle est disposé un compresseur (41), sous la forme d'une unité (4) destinée à produire une dépression dans le réservoir (1), en configuration de remplissage, et sous la forme d'une unité (4) destinée à produire une surpression dans le réservoir (1), en configuration de vidange ;
- une conduite d'aspiration (115) qui est reliée à la conduite de compresseur (113), en amont du compresseur (41), et dans laquelle est disposée une vanne d'aspiration (12.2) ;
- une conduite d'effluents gazeux (114) qui est reliée à la conduite de compresseur (113), en aval du compresseur (41), et dans laquelle sont disposés un filtre d'effluents gazeux (15) et une vanne d'effluents gazeux (12.3) ;
- une conduite d'écoulement (116) qui est raccordée à la conduite de compresseur (113) et dans laquelle est disposée une vanne de système de conduite de vidange (12.4), la conduite d'écoulement (116) étant en outre reliée au système de conduite de vidange (8) ; et
- une conduite de régulation (117) qui est reliée à la conduite d'écoulement (116) et dans laquelle est disposée une vanne de régulation (12.5), la conduite de régulation (117) étant en outre reliée à la conduite sous pression (111).

2. Dispositif selon la revendication I, **caractérisé en ce que**, dans la configuration de vidange, où l'ouverture de vidange (3) est en position ouverte, le compresseur (41) est relié du point de vue de l'écoulement au système de conduite de vidange (8), de telle sorte que le système de conduite de vidange (8) est parcouru par un fluide en vue de l'entraînement ou de l'évacuation des granulés ou des produits en vrac.

3. Dispositif selon la revendication I ou 2, **caractérisé en ce que** l'ouverture de remplissage (2) est disposée dans un couvercle (9) qui recouvre le réservoir (1) et est de préférence actionné manuellement.

4. Dispositif selon l'une des revendications I à 3, **caractérisé en ce qu'**il est prévu un dispositif d'enroulement et/ou un dispositif de stockage (10) destiné à enrouler et/ou stocker le système de conduites (5) ou de parties de celui-ci.
